# EUROPEAN PATENT SPECIFICATION

(11) **EP 2 960 734 B1**
(45) Date of publication and mention of the grant of the patent: **01.08.2018**
(21) Application number: 15172833.4
(22) Date of filing: 19.06.2015
(51) Int. Cl.: G05B 19/05

(54) **COMMUNICATION SYSTEM, PROGRAMMABLE INDICATOR, INFORMATION PROCESSING DEVICE, OPERATION CONTROL METHOD, INFORMATION PROCESSING METHOD, AND PROGRAM**
KOMMUNIKATIONSSYSTEM, PROGRAMMIERBARER INDIKATOR, INFORMATIONSVERARBEITUNGSVORRICHTUNG, BETRIEBSSTEUERUNGSVERFAHREN, INFORMATIONSVERARBEITUNGSVERFAHREN UND PROGRAMM
SYSTEME DE COMMUNICATION, INDICATEUR PROGRAMMABLE, DISPOSITIF DE TRAITEMENT D'INFORMATIONS, PROCEDE DE COMMANDE D'OPERATION, PROCEDE DE TRAITEMENT D'INFORMATIONS ET PROGRAMME

(30) Priority: 27.06.2014 JP 2014132364
(43) Date of publication of application: 30.12.2015
(73) Proprietor: OMRON CORPORATION, Kyoto, Kyoto 600-8530 (JP)
(72) Inventor: NAGATA, Yuta, Kyoto, Kyoto 600-8530 (JP); SEKIMOTO, Hidehiko, Kyoto, Kyoto 600-8530 (JP)
(74) Representative: Horn Kleimann Waitzhofer Patentanwälte PartG mbB

(56) References cited:
- EP-A1- 2 701 021
- US-A1- 2014 089 354

## Description

### FIELD

The present invention relates to a communication system, a programmable indicator, an information processing device, an operation control method, an information processing method, and a program.

### BACKGROUND

Conventionally, there is well known a PLC (Programmable Logic Controller) system including a PLC, a programmable indicator that is a Human Machine Interface (HMI) or a Man Machine Interface (MMI), and a device that is a control target of the PLC. Conventionally, various logs are managed while stored in a memory, which allows user to check the log.

For example, JP 2000-99373 A discloses a history information management system that properly processes history information based on a mutual relationship of the history information and the like as a log management configuration. Specifically, in the history information management system, a condition that detects the unnecessary history information and a deletion processing content that is performed on the history information detected under the condition are paired, and stored as a management rule. The history information management system detects the history information matched with the stored condition from the memory, and performs deletion processing correlated with the condition on the detected history information.

For example, JP 2011-108157 A discloses a man machine device that manages the log. The man machine device obtains a screen operation log during screen operation and image data in screen operation timing, and stores the screen operation log and the image data on a one-on-one basis. In the man machine device, a log size of the screen operation log stored in a screen operation log file is managed so as not to exceed a predetermined value at any time.

For example, JP 2012-64129 A discloses a method for integrating a GUI (Graphical User Interface) having a function of automatically acquiring an operation log of each application. In the integrating method, the operation log is analyzed in order to find a GUI component dealing with a data item common to applications from the acquired operation log. Additionally, in the integrating method, the GUI component dealing with the common data item is integrated, and a new integration GUI is generated to unify input to a plurality of applications.

For example, JP 2007-128176 A discloses a computing system that manages the log information. The computing system provides a global ID that is unique in the computing system to a resource that is moved between file shared servers. The computing system transfers the global ID to the file shared server of a moving destination during resource movement.
EP 2 701 021 A1 discloses a PLC that is enabled to determine whether device data has been completely transferred to an FTP server and is improved in the flexibility of setting for a completed-transfer notice code. To this end, the PLC includes a logging section for logging device data and outputting a log file describing the results of logging of the device data to a memory card; and a file transfer section for transferring the log file delivered to the memory card to the FTP server. After having completely transferred all the data that constitutes the log file, the file transfer section inserts the completed-transfer notice code specified by a logging setting parameter 40 predefined by the user into the log file transferred to the FTP server and stored in the FTP server.

### SUMMARY

However, in the conventional technology, it is necessary for the user to directly perform setting operation on the programmable indicator in order to cause the programmable indicator to acquire the log.

An object of the present invention is to provide a communication system that can cause the programmable indicator to acquire the log in desired timing of the user without directly performing the setting operation on the programmable indicator, the programmable indicator and an information processing device of the communication system, an operation control method in the programmable indicator, an information processing method in the information processing device, and a program.

According to a first aspect of the present invention, a communication system is provided that has the features of claim 1. According to a second aspect of the present invention, a method for operating a communication system is provided that has the features of claim 10.

Preferably the control unit performs processing of transmitting a second control command for stopping the performance of the logging function to the programmable indicator when the reception unit receives second input operation while the logging function is performed. The programmable indicator stops the performance of the logging function when receiving the second control command from the information processing device.

Preferably the logging function is a function of outputting a log associated with the programmable indicator to a file.

Preferably the programmable indicator is temporally synchronized with the information processing device. The log associated with the programmable indicator includes clock time information.

Preferably the communication system further includes a server device communicably connected to the information processing device. The information processing device transmits the log associated with the programmable indicator to the server device.

Preferably the programmable indicator is communicably connected to a control device of a device. The logging function is a function of outputting a log associated with the device to a file.

Preferably the device is temporally synchronized with the control device. The log associated with the device includes clock time information.

Preferably the communication system further includes a server device communicably connected to the information processing device. The information processing device transmits the log associated with the device to the server device.

Preferably the programmable indicator generates a log file in which a log is recorded by the logging function. The control unit performs processing of transmitting a fourth control command for deleting the log file to the programmable indicator when the reception unit receives fourth input operation to delete the log file. The programmable indicator deletes the log file when receiving the fourth control command from the information processing device.

Preferably the information processing device includes a web browser. The programmable indicator performs processing of causing the information processing device to display a content of the log file based on a command from the web browser.

Further disclosed is a programmable indicator that includes a logging function. The programmable indicator includes a reception unit configured to receive a control command for performing the logging function from an information processing device and a control unit configured to perform the logging function based on the reception of the control command.

Further disclosed is an information processing device that is configured to be communicable with a programmable indicator including a logging function. The information processing device includes a reception unit configured to receive input operation and a control unit configured to control the programmable indicator. The control unit performs processing of transmitting a control command for performing the logging function to the programmable indicator when the reception unit receives predetermined input operation.

Further disclosed is an operation control method that is performed in a programmable indicator including a logging function. The operation control method includes the steps of receiving a control command for performing the logging function from an information processing device and performing the logging function based on the reception of the control command.

Further disclosed is an information processing method is performed in an information processing device configured to be communicable with a programmable indicator including a logging function. The information processing method includes the steps of receiving predetermined input operation and transmitting a control command for performing the logging function to the programmable indicator based on the reception of the predetermined input operation.

Further disclosed is a program that is configured to control a programmable indicator including a logging function. The program causes a processor of the programmable indicator to perform the steps of receiving a control command for performing the logging function from an information processing device and performing the logging function based on the reception of the control command.

Further disclosed is a program that is configured to control an
information processing device communicable with a programmable indicator including a logging function. The program causes a processor of the information processing device to perform the steps of receiving predetermined input operation and transmitting a control command for performing the logging function to the programmable indicator based on the reception of the predetermined input operation.

In the present invention, the information processing device other than the programmable indicator can cause the programmable indicator to acquire the log.

### BRIEF DESCRIPTION OF THE DRAWINGS

Fig. 1 is a schematic diagram illustrating a PLC system 1000 according to a first embodiment;
Fig. 2 is a flowchart illustrating a processing flow of the PC system 1000;
Fig. 3 is a functional block diagram illustrating functional configurations of a programmable indicator 4 and a PC 5;
Fig. 4 is a view illustrating an outline of a setting file F4;
Fig. 5 is a flowchart illustrating an outline of a sequence of pieces of processing after the programmable indicator 4 is powered on;
Fig. 6 is a flowchart illustrating detailed processing in Step SA of Fig. 5;
Fig. 7 is a flowchart illustrating detailed processing in Step S104 of Fig. 6;
Fig. 8 is a flowchart illustrating detailed processing in Step S114 of Fig. 6;
Fig. 9 is a flowchart illustrating detailed processing in Step S116 of Fig. 6;
Fig. 10 is a view illustrating an example of a hardware configuration of the programmable indicator 4;
Fig. 11 is a schematic diagram illustrating a hardware configuration of the PC 5; and
Fig. 12 is a schematic view illustrating a PLC system 1000A that is a modification of the PLC system 1000.

### DETAILED DESCRIPTION

Hereinafter, an exemplary embodiment of the present invention will be described in detail with reference to the drawings. In the drawings, the identical or equivalent component is designated by the identical symbol, and the overlapping description is omitted.

### <A. System configuration>

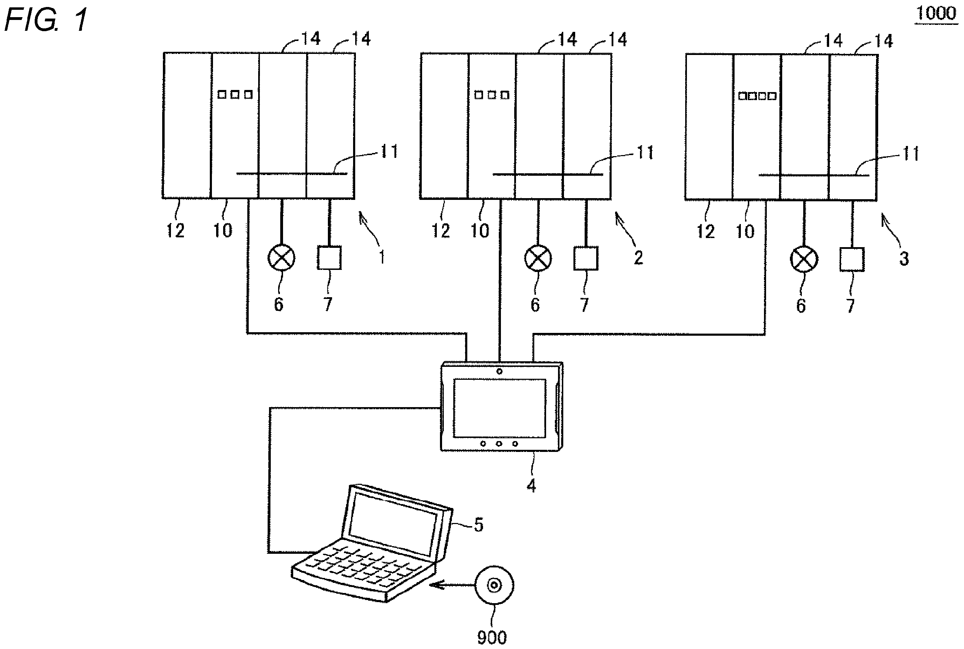

Fig. 1 is a schematic diagram illustrating a PLC system 1000 according to a first embodiment. Referring to Fig. 1, the PLC system 1000 that is the communication system includes a plurality of PLCs 1, 2, and 3, a programmable indicator 4, and a PC (Personal Computer) 5.

Typically, each of the PLCs 1 to 3 includes a CPU unit 10 that is a main body executing a program, a power-supply unit 12 that supplies power to the CPU unit 10 and the like, and an IO (Input and Output) unit 14 that transmits and receives a signal to and from a field. The IO unit 14 is connected to the CPU unit 10 through a system bus 11. Typically, the IO unit 14 acquires an input signal from a detection sensor 6 that is a field device, and drives a relay 7 that is the field device according to a program execution result of the CPU unit 10.

The programmable indicator 4 acts as a GUI (Graphical User Interface) in an HMI (Human Machine Interface) environment. The programmable indicator 4 includes an operation unit such as a touch panel, a display such as a liquid crystal display, a communicator that communicates with the CPU unit 10, and a controller that controls each unit. In each of the PLCs 1 to 3, various settings can be changed in response to operation of the operation unit of the programmable indicator 4 and, predetermined information on the PLC can be displayed on the programmable indicator 4.

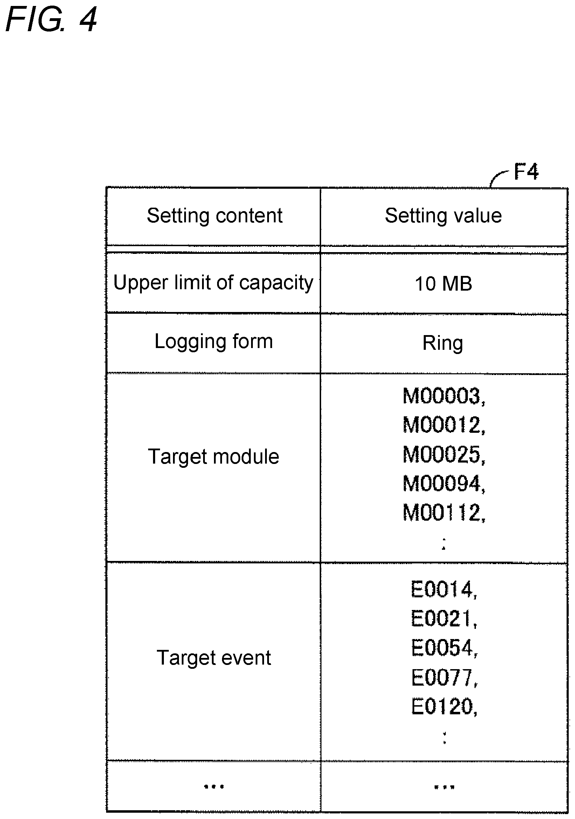

The programmable indicator 4 has a logging function. That is, the programmable indicator 4 has a function of acquiring various logs and storing the acquired logs in a memory. Typically, the programmable indicator 4 sequentially acquires the log by referring to a setting file (see Fig. 4) in which an acquisition target, an acquisition method, and a management method of the log are described. The programmable indicator 4 writes the acquired log in a previously-designated file (hereinafter, referred to as a "log file").

By way of example, the programmable indicator 4 refers to the setting file every time a command for performing the logging function is received. Alternatively, the programmable indicator 4 refers to the setting file every time a predetermined event is generated in the programmable indicator 4. Alternatively, the programmable indicator 4 refers to the setting file every time a predetermined command is received from the PC 5. Thus, there is no particular limitation to a trigger of the processing of referring to the setting file.

Although described in detail later, the programmable indicator 4 can perform or stop the logging function. Hereinafter, the performance of the logging function is also referred to as "turning on the logging function". The stopping of the performance of the logging function is also referred to as "turning off the logging function".

The PC 5 is connected to the programmable indicator 4. The PC 5 has a function of monitoring running states of the PLCs 1 to 3 of connection targets and values of various pieces of data. The PC 5 can control action of the programmable indicator 4 by transmitting various control commands to the programmable indicator 4. Although described in detail later, the PC 5 transmits various control commands associated with logging of the programmable indicator 4 to the programmable indicator 4.

In the case where the PC 5 acts as a support device, the PC 5 generates the program executed by the PLCs 1 to 3 and setting information. The PC 5 may have a debug function and a simulation function in order to support the generation of a program executable by a user.

The case where the programmable indicator 4 acquires the log (typically, action log) associated with the programmable indicator 4 of itself by the logging function will be described below as an embodiment. That is, an aspect in which a developer who is involved in production of the programmable indicator 4 causes the programmable indicator 4 to acquire the log associated with the programmable indicator 4 of itself in order to use the log in an analysis during debug of the programmable indicator 4 or generation of a malfunction will be described below.

However, the log acquisition processing executable by the PLC system 1000 is not limited to the acquisition of the log of the programmable indicator 4. For example, the PLC system 1000 can be configured such that a logging target of the programmable indicator 4 is set to various devices connected to the PLCs 1 to 3. That is, the logging function of the programmable indicator 4 can be set to a function of outputting the log (such as a data log and an alarm log) associated with the device to the log file.

### <B. Outline of processing>

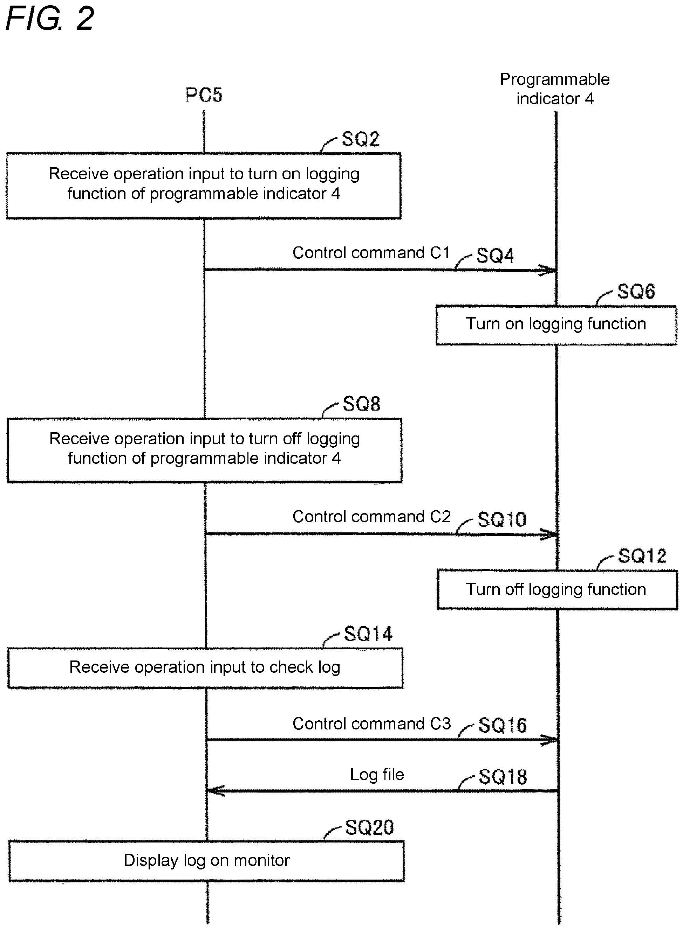

Fig. 2 is a flowchart illustrating a processing flow of the PLC system 1000. Referring to Fig. 2, in Sequence SQ2, the PC 5 receives input operation to turn on the logging function of the programmable indicator 4 from the user. The input operation is performed using input units such as a keyboard and a mouse.

In Sequence SQ4, the PC 5 transmits a control command C1 for turning on the logging function to the programmable indicator 4. In Sequence SQ6, the programmable indicator 4 turns on the logging function based on the reception of the control command C1. Therefore, based on the fact that a predetermined event is generated in the programmable indicator 4, the programmable indicator 4 writes the log associated with the event in the log file.

In Sequence SQ8, the PC 5 receives the input operation to turn off the logging function of the programmable indicator 4 from the user. In Sequence SQ10, the PC 5 transmits a control command C2 for turning off the logging function to the programmable indicator 4. In Sequence SQ12, the programmable indicator 4 turns off the logging function based on the reception of the control command C2. Therefore, the programmable indicator 4 does not write the log associated with the event in the log file even if the predetermined event is generated in the programmable indicator 4.

In Sequence SQ14, the PC 5 receives the input operation to check the log stored in the programmable indicator 4. In Sequence SQ16, the PC 5 transmits a control command C3 for checking the log to the programmable indicator 4. In Sequence SQ18, the programmable indicator 4 transmits the log file or data (typically, the data produced using a markup language, such as HTML (HyperText Markup Language), which is used to describe a document on the web) used to display the log file to the PC 5. In Sequence SQ20, the PC 5 displays the log on a monitor based on the log file or image data.

In this configuration, the PC 5 that is an information processing device other than the programmable indicator 4 can cause the programmable indicator 4 to acquire the log or to stop the acquisition of the log. Therefore, the user can acquire the log for desired time using the PC 5 when wanting to acquire the log. Particularly, in the case where the PC 5 and the programmable indicator 4 are separately installed, the user can remotely acquire the log in desired timing.

### <C. Functional configuration>

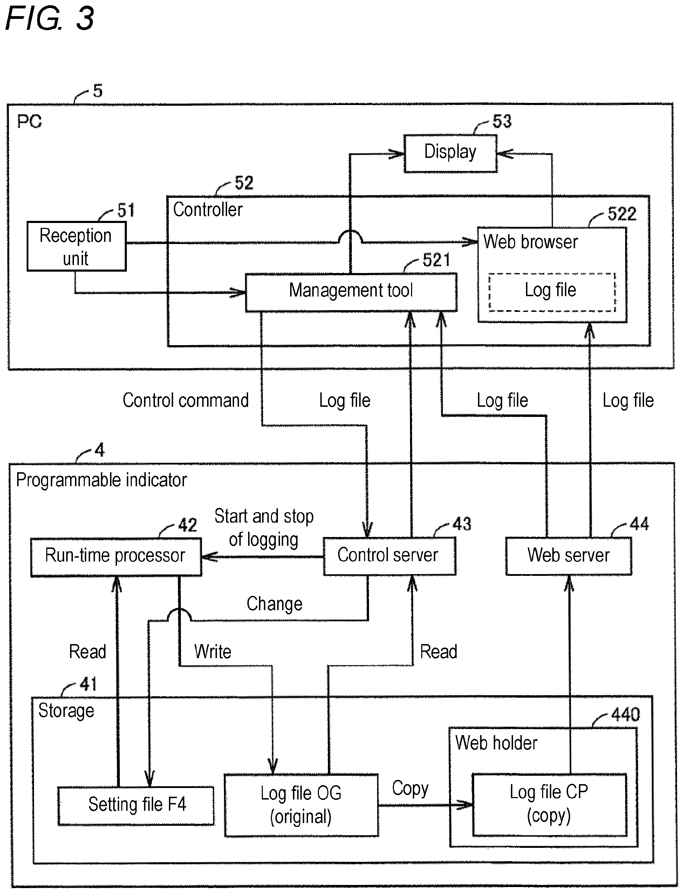

Fig. 3 is a functional block diagram illustrating functional configurations of the programmable indicator 4 and the PC 5. Referring to Fig. 3, the programmable indicator 4 includes a storage 41, a run-time processor 42, a control server 43, and a web server 44. The PC 5 includes a reception unit 51, a controller 52, and a display 53. The controller 52 includes a management tool 521 and a web browser 522.

### (c1. Outline of functional block of programmable indicator 4)

A setting file F4 (see Fig. 4) is previously stored in the storage 41. The storage 41 includes a web holder 440 in which a file to be disclosed on the web is stored. Typically, a log file OG is generated every time the logging function is turned on, and stored in the storage 41. A plurality of log files OG may be generated while distinguished from each other. There is no particular limitation to a form in which the log file OG is stored.

Although described in detail later, a log file CP that is a copy of the log file OG is stored in the web holder 440.

The run-time processor 42 performs various pieces of processing in the programmable indicator 4. The run-time processor 42 acquires the log of the programmable indicator 4 of itself. The run-time processor 42 is configured to include a plurality of modules that perform HMI run time. For example, various libraries such as a DLL (Dynamic Link Library) and various classes correspond to the modules. For convenience, it is assumed that the number of modules is n (n is a natural number of 2 or more).

The run-time processor 42 can also monitor the PLCs 1 to 3 and various devices connected to the PLCs 1 to 3, and collect pieces of data transmitted from various devices through the PLCs 1 to 3. Specifically, the run-time processor 42 includes a display (not illustrated) and a communicator (not illustrated). The communicator communicates with each of the PLCs 1 to 3 in a designated period. The display displays a page designated by the user, out of a plurality of pages.

The control server 43 is used in the communication with the PC 5. Particularly, the control server 43 communicates with the management tool 521 of the PC 5. More particularly, the control server 43 transmits and receives a command to and from the PC 5 using an HTTP protocol and server-side scripting. The detailed communication between the control server 43 and the management tool 521 of the PC 5 is described later.

The web server 44 has a function of interpreting the HTTP protocol, and provides information to a request source in response to a request (HTTP request) received through the web. Particularly, the web server 44 communicates with the PC 5. Particularly, the web server 44 communicates with the management tool 521 and web browser 522 of the PC 5. Although described in detail later, the web server 44 transmits the log file based on the request from the PC 5.

### (c2. Outline of functional block of PC 5)

The reception unit 51 of the PC 5 receives the input operation from the user. When receiving the input operation associated with the web browser 522, the reception unit 51 transmits the received content to the web browser 522. When receiving the input operation associated with the processing managed by the management tool 521, the reception unit 51 transmits the received content to the management tool 521.

The controller 52 controls the action of the PC 5. The controller 52 performs processing based on the input received by the reception unit 51. The controller 52 caused the display 53 that is the monitor to display various images. The controller 52 communicates with the programmable indicator 4 through a communication IF (InterFace, not illustrated).

The web browser 522 performs processing of browsing the information disclosed on the web. Particularly, the web browser 522 acquires information such as the log file from the web server 44 of the programmable indicator 4.

### (c3. Detailed processing)

The processing performed when the PC 5 receives various input operations from the user will specifically be described below.

(1) Turning on and off logging function

When receiving the input operation to turn on the logging function of the programmable indicator 4, the reception unit 51 of the PC 5 notifies the management tool 521 of a content of the received input operation.

The management tool 521 transmits the control command C1 (see Fig. 2) to the control server 43 of the programmable indicator 4.

When receiving the control command C1, the control server 43 transmits an instruction to turn on the logging function to the run-time processor 42. When receiving the instruction, the run-time processor 42 turns on the logging function. Particularly, when receiving the instruction, the run-time processor 42 writes the log based on the event in the log file OG in the case where the event (predetermined event) defined in the setting file F4 is generated in the module defined in the setting file F4.

When receiving the input operation to turn off the logging function of the programmable indicator 4, the reception unit 51 of the PC 5 notifies the management tool 521 of the content of the received input operation. The management tool 521 transmits the control command C2 (see Fig. 2) to the control server 43 of the programmable indicator 4.

When receiving the control command C2, the control server 43 transmits an instruction to turn off the logging function to the run-time processor 42. When receiving the instruction, the run-time processor 42 turns off the logging function. Therefore, the log based on the event is not written in the log file OG even if the event defined in the setting file F4 is generated in the programmable indicator 4.

Thus, the PC 5 includes the reception unit 51 that receives the input operation and the controller 52 that controls the programmable indicator 4. When the reception unit 51 receives the input operation (first input operation) to turn on the logging function, the controller 52 performs the processing of transmitting the control command C1 (first control command) for performing the logging function to the programmable indicator 4. When receiving the control command C1 from the PC 5, the programmable indicator 4 performs the logging function.

On the other hand, when the reception unit 51 receives the input operation (second input operation) to turn off the logging function while the logging function is activated, the controller 52 performs the processing of transmitting the control command C2 (second control command) for stopping the performance of the logging function to the programmable indicator 4. When receiving the control command C2 from the PC 5, the programmable indicator 4 stops the performance of the logging function.

Therefore, in the PLC system 1000, the PC 5 can cause the programmable indicator 4 to acquire the log or to stop the acquisition of the log.

### (2) Copy processing performed on web holder 440

When receiving the input operation to disclose the log file on the web, the reception unit 51 of the PC 5 notifies the management tool 521 of the content of the received input operation. The management tool 521 transmits a control command C4 for disclosing the log life on the web to the control server 43. When receiving the control command C4, the control server 43 stores the copy (log file CP) of the log file OG in the web holder 440.

In this configuration, the user can put the log file into a state browsable by a web browser using the PC 5.

### (3) Processing of deleting log file OG

When receiving the input operation to delete the log file, the reception unit 51 of the PC 5 notifies the management tool 521 of the content of the received input operation. The management tool 521 transmits a control command C5 for deleting the log life OG to the control server 43. When receiving the control command C5, the control server 43 deletes the log file OG.

In this configuration, the user can delete the log file OG of the programmable indicator 4 using the PC 5. The control server 43 may be configured to delete the log file CP of the web holder 440 together with the log file OG.

### (4) Processing of updating setting file F4

When receiving the input operation to update (change the description of) the setting file F4, the reception unit 51 of the PC 5 notifies the management tool 521 of the content of the received input operation. The management tool 521 transmits a control command C6 for changing the description of the setting file F4 according to the input operation to the control server 43. Particularly, the management tool 521 transmits the control command C6 including a command for updating the setting file F4 and a description expressing the update content to the control server 43. When receiving the control command C6, the control server 43 updates the description of the setting file F4 using the description included in the control command C6.

In this configuration, the user can update the description of the setting file F4 of the programmable indicator 4 using the PC 5. Accordingly, the user can acquire the log in various modes (types and methods).

### (5) Processing of acquiring and displaying log file OG through control server 43

When receiving the input operation to acquire the log file OG, the reception unit 51 of the PC 5 notifies the management tool 521 of the content of the received input operation. The management tool 521 transmits the control command C3 for transmitting the log life OG to the management tool 521 to the control server 43. When receiving the control command C3, the control server 43 transmits the log file OG to the management tool 521. In this case, the management tool 521 causes the display 53 to display the log file OG received from the control server 43.

### (6) Processing of acquiring and displaying log file CP through web server 44

When receiving the input operation to browse the log file CP using the web browser 522, the reception unit 51 of the PC 5 notifies the web browser 522 of the content of the received input operation. In this case, the web browser 522 causes the display 53 to display a screen based on the log file CP stored in the web holder 440.

Access to the web server 44 can be gained from the management tool 521. That is, the log file CP of the programmable indicator 4 can be read from the management tool 521.

### <D. Data>

Fig. 4 is a view illustrating an outline of the setting file F4. Referring to Fig. 4, in the setting file F4, at least an upper limit of a log storing capacity, a logging form, a target module that identifies a module acquiring the log, and an event that triggers the acquisition of the log are described in setting value fields.

As described above, the run-time processor 42 of the programmable indicator 4 is configured to include the plurality of modules that perform the HMI run time. When turning on the logging function based on the control command from the PC 5, the programmable indicator 4 writes the log of the module, which is defined in the setting file F4 in the plurality of modules, in the log file OG in the case where the event defined in the setting file F4 is generated.

The event may individually be correlated with each of the plurality of modules described in the target module.

### <E. Control structure>

### (e1. Outline of whole processing)

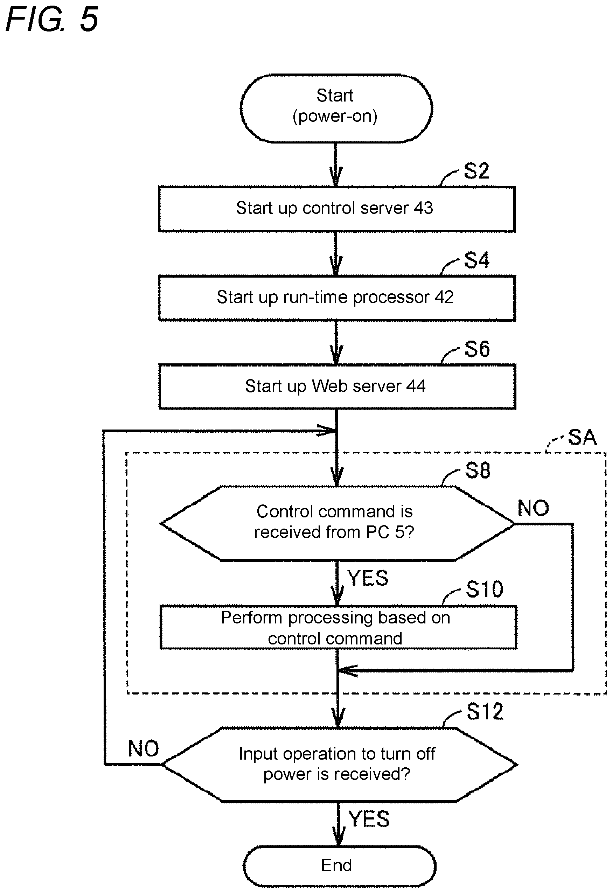

Fig. 5 is a flowchart illustrating an outline of a sequence of pieces of processing after the programmable indicator 4 is powered on. When the programmable indicator 4 is powered on, the programmable indicator 4 starts the control server 43 in Step S2. In Step S4, the programmable indicator 4 starts up the run-time processor 42. In Step S6, the programmable indicator 4 starts up the web server 44.

In Step S8, the programmable indicator 4 determines whether the control command is received from the PC 5. When determining that the control command is received (YES in Step S8), the programmable indicator 4 performs the processing based on the control command in Step S10. When determining that the control command is not received (NO in Step S8), the programmable indicator 4 progresses the processing to Step S12.

In Step S12, the programmable indicator 4 determines whether a power-off input is received. When determining that the power-off input is received (YES in Step S12), programmable indicator 4 ends a sequence of pieces of processing. When determining that the power-off input is not received (NO in Step S12), the programmable indicator 4 progresses the processing to Step S8.

Hereinafter, a step of a combination of the processing in Step S8 and the processing in Step S10 is also referred to as "Step SA".

### (e2. Detailed processing in Step SA)

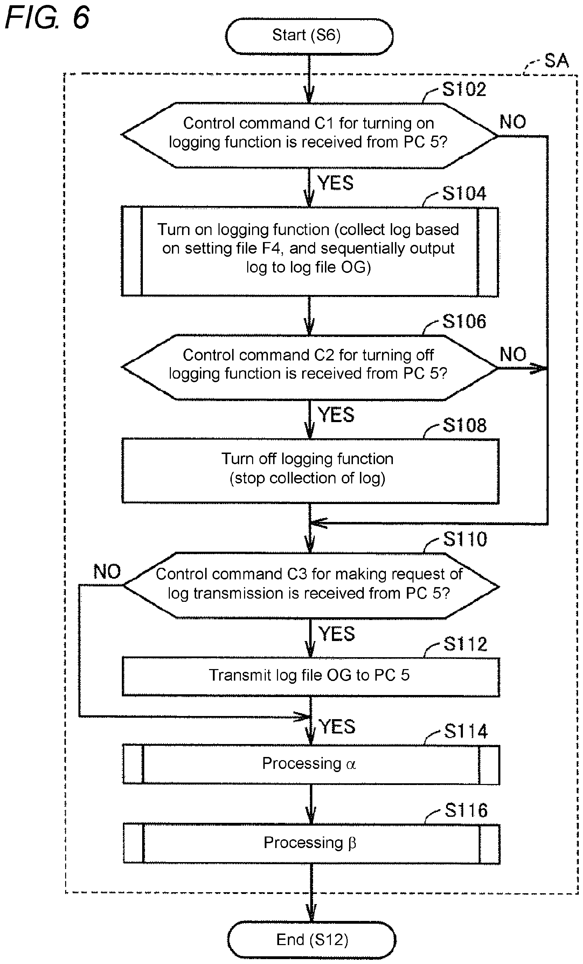

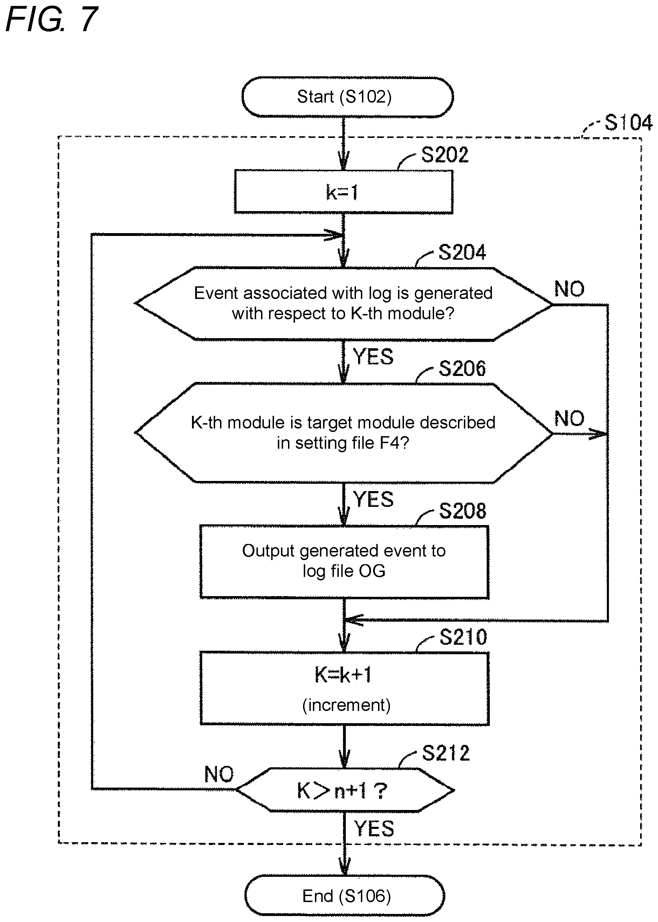

Fig. 6 is a flowchart illustrating the detailed processing in Step SA of Fig. 5. Referring to Fig. 6, in Step S102, the programmable indicator 4 determines whether the control command C1 for turning on the logging function is received from the PC 5. When determining that the control command C1 is received (YES in Step S102), the programmable indicator 4 turns on the logging function based on the control command C1 in Step S104. That is, the programmable indicator 4 collects the log based on the setting file F4, and sequentially outputs the log to the log file OG. The detailed processing in Step S104 is described later (Fig. 7). When determining that the control command C1 is not received (NO in Step S102), the programmable indicator 4 progresses the processing to Step S110.

In Step S106, the programmable indicator 4 determines whether the control command C2 for turning off the logging function is received from the PC 5. When determining that the control command C2 is received (YES in Step S106), the programmable indicator 4 turns off the logging function based on the control command C2 in Step S108. That is, the programmable indicator 4 stops the collection of the log. When determining that the control command C2 is not received (NO in Step S106), the programmable indicator 4 progresses the processing to Step S110.

In Step S110, the programmable indicator 4 determines whether the control command C3 for requesting the transmission of the log is received from the PC 5. When determining that the control command C3 is received (YES in Step S110), the programmable indicator 4 transmits the log file OG to the PC 5 in Step S112. When determining that the control command C3 is not received (NO in Step S110), the programmable indicator 4 progresses the processing to Step S114.

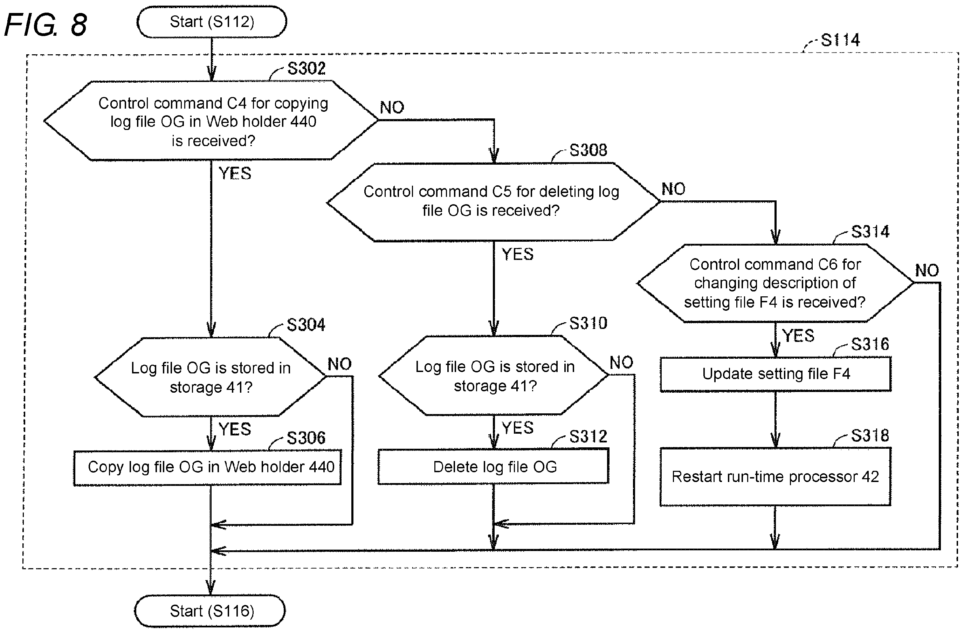

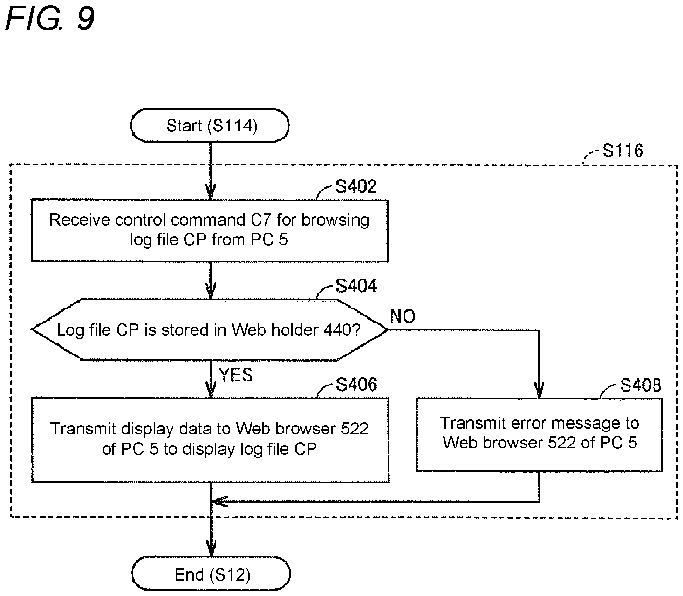

In Step S114, the programmable indicator 4 performs processing α. In Step S116, the programmable indicator 4 performs processing β. The processing α and the processing β are described in detail later (Figs. 8 and 9). After the processing in Step S116, the programmable indicator 4 progresses the processing to Step S12.

Fig. 7 is a flowchart illustrating the detailed processing in Step S104 of Fig. 6. Referring to Fig. 7, in Step S202, the programmable indicator 4 sets a variable k to 1. In Step S104, the programmable indicator 4 determines whether the event associated with the log of the k-th module is generated.

When determining that the event is generated (YES in Step S204), the programmable indicator 4 determines whether the k-th module is the target module described in the setting file F4 in Step S206. When determining that the event is not generated (NO in Step S204), the programmable indicator 4 progresses the processing to Step S210.

When determining that the k-th module is the target module (YES in Step S206), the programmable indicator 4 outputs the event to be generated to the log file OG in Step S208. When determining that the k-th module is not the target module (NO in Step S206), the programmable indicator 4 progresses the processing to Step S210.

In Step S210, the programmable indicator 4 increases the value of k by 1. That is, the programmable indicator 4 increments the value of k. In Step S212, the programmable indicator 4 determines whether the value of k is greater than or equal to a value of "n + 1". As described above, n is the number of modules included in the run-time processor 42.

When determining that the value of k is greater than or equal to the value of "n + 1" (YES in Step S212), the programmable indicator 4 progresses the processing to Step S106. When determining that the value of k is less than the value of "n + 1" (NO in Step S212), the programmable indicator 4 progresses the processing to Step S204.

Fig. 8 is a flowchart illustrating the detailed processing in Step S114 of Fig. 6. Referring to Fig. 8, in Step S302, the programmable indicator 4 determines whether the control command C4 for copying the original log file OG in the web holder is received from the PC 5. When determining that the control command C4 is received (YES in Step S302), the programmable indicator 4 determines whether the log file OG is stored in the storage 41 in Step S304.

When determining that the log file OG is stored in the storage 41 (YES in Step S304), the programmable indicator 4 copies the log file OG in the web holder 440 in Step S306. Therefore, the log file CP is stored in the web holder. When determining that the log file OG is not stored in the storage 41 (NO in Step S304), the programmable indicator 4 progresses the processing to Step S116.

When determining that the control command C4 is not received (NO in Step S302), the programmable indicator 4 determines whether the control command C5 for deleting the log file OG is received from the PC 5 in Step S308. When determining that the control command C4 is received (YES in Step S308), the programmable indicator 4 determines whether the log file OG is stored in the storage 41 in Step S310.

When determining that the log file OG is stored in the storage 41 (YES in Step S310), the programmable indicator 4 deletes the log file OG from the storage 41 in Step S312. When determining that the log file OG is not stored in the storage 41 (NO in Step S310), the programmable indicator 4 progresses the processing to Step S116.

When determining that the control command C5 is not received (NO in Step S308), the programmable indicator 4 determines whether the control command C6 for changing the description of the setting file F4 is received from the PC 5 in Step S314. When determining that the control command C6 is received (YES in Step S314), the programmable indicator 4 updates the description of the setting file F4 based on the content of the control command C6 in Step S316. In Step S318, the programmable indicator 4 restarts the run-time processor 42. When determining that the control command C6 is not received (NO in Step S314), the programmable indicator 4 progresses the processing to Step S116.

Fig. 9 is a flowchart illustrating the detailed processing in Step S116 of Fig. 6. Referring to Fig. 9, in Step S402, the programmable indicator 4 determines whether a control command C7 for browsing the log file CP is received from the PC 5. In Step S404, the programmable indicator 4 determines whether the log file CP is stored in the web holder 440.

When determining that the log file CP is stored in the web holder 440 (YES in Step S404), the programmable indicator 4 transmits the display data used to display the log file CP to the web browser 522 of the PC 5 in Step S406. When determining that the log file CP is not stored in the web holder 440 (NO in Step S404), the programmable indicator 4 transmits an error message to the web browser 522 of the PC 5 in Step S408.

### <F. Hardware configuration>

### (f1. Programmable indicator 4)

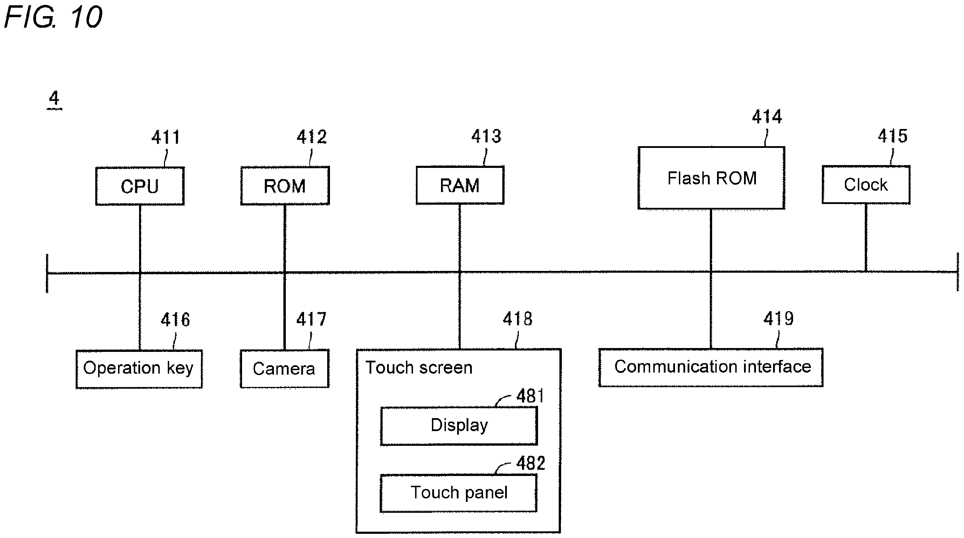

Fig. 10 is a view illustrating an example of a hardware configuration of the programmable indicator 4. Referring to Fig. 10, the programmable indicator 4 includes a CPU (Central Processing Unit) 411 that performs various calculations, a ROM (Read Only Memory) 412, a RAM (Random Access Memory) 413, a flash ROM 414 in which various programs are stored in a non-volatile manner, a clock 415, an operation key 416, a camera 417, a touch screen 418, and a communication interface 419. These units are connected to one another through an internal bus.

The touch screen 418 includes a display 481 and a touch panel 482 that is installed so as to cover the display 481.

The communication interface 419 includes various communication interfaces such as an Ethernet (registered trademark) IF (InterFace), a serial IF, and a USB (Universal Serial Bus) IF. The programmable indicator 4 communicates with various electronic devices such as the PLCs 1 to 3 and the PC 5 through the communication interface 419.

The CPU 411 executes a program stored in the flash ROM 414 while expanding the program in the RAM 413. Generally, a program such as an Operating System (OS) is stored in the ROM 412. The RAM 413 is a volatile memory used as a work memory.

Fig. 10 illustrates general components constituting the programmable indicator 4. Accordingly, it is also said that a component necessary for the present invention is software stored in the memory such as the flash ROM 414 or software that can be downloaded through a network. Because action of each piece of hardware of the programmable indicator 4 is well known, the detailed description is not repeated.

### (f2. PC5)

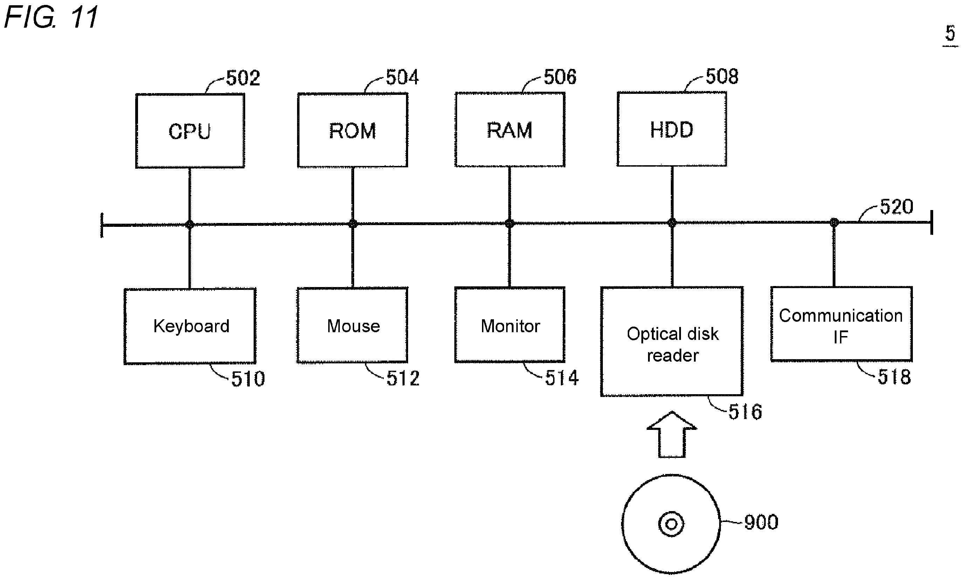

Fig. 11 is a schematic diagram illustrating a hardware configuration of the PC 5. Referring to Fig. 11, the PC 5 includes CPU 502 that executes various programs including the OS, a ROM (Read Only Memory) 504 in which BIOS and various pieces of data are stored, a RAM 506 that provides a work area where data necessary for the program executed by the CPU 502 is stored, and a hard disk (HDD) 508 in which the program executed by the CPU 502 is stored in a non-volatile manner.

The PC 5 also includes a keyboard 510 that receives the operation from the user, a mouse 512, and a monitor 514 that provides information to the user. The PC 5 also includes a communication interface (IF) 518 that communicates with the programmable indicator 4. The PC 5 is communicably connected to the programmable indicator 4 by the communication IF 518.

### <G. Modifications>

Modifications of the PLC system 1000 will be described below. Specifically, a configuration in which the log file is stored with the clock time information provided to the log while the PC and the programmable indicator are temporally synchronized with each other, and a configuration in which the log file is stored with the clock time information provided to the log while a master device and a slave device are temporally synchronized with each other will be described below. A configuration in which the log file stored in the programmable indicator is uploaded on the server device will be described.

### <g1. Outline of system configuration>

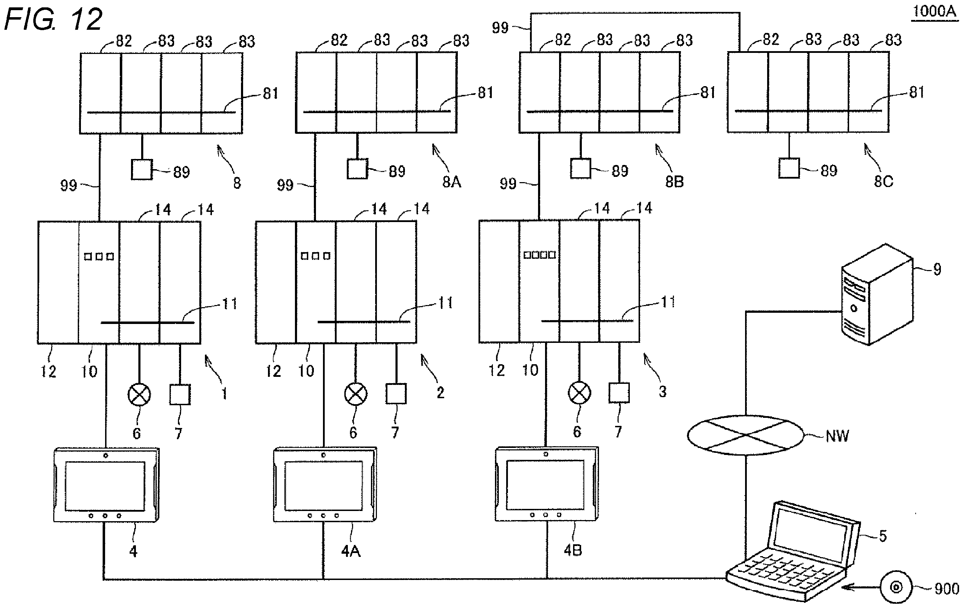

Fig. 12 is a schematic view illustrating a PLC system 1000A of the modification of the PLC system 1000. Referring to Fig. 12, the PLC system 1000A includes the PLCs 1, 2, and 3, programmable indicators 4, 4A, and 4B, the PC 5, remote IO terminals 8, 8A, 8B, and 8C, and a server device 9. Each of the remote IO terminals 8, 8A, 8B, and 8C includes a remote IO terminal bus 81 that is a system bus (internal bus), a communication coupler 82, and at least one IO unit 83.

In the PLC system 1000A, the PC 5 is communicably connected to the server device 9 through a network NW. The network NW may be either the Internet or an intranet.

In the PLC system 1000A, it is assumed that the programmable indicator 4 is connected to the PLC 1 while not connected to the PLCs 2 and 3. The programmable indicator 4A is connected to the CPU unit 10 of the PLC 2. The programmable indicator 4B is connected to the CPU unit 10 of the PLC 3. The programmable indicators 4A and 4B have the hardware configuration similar to that of the programmable indicator 4, and perform the data processing similar to that of the programmable indicator 4. The programmable indicators 4, 4A, and 4B are communicably connected to the PC 5.

Basically, the remote IO terminal 8 performs the processing associated with the general input and output processing similarly to the IO unit 14. A communication coupler 82 of the remote IO terminal 8 performs the processing associated with data transfer in a field network 99. The communication coupler 82 of the remote IO terminal 8 can transmit and receive the data to and from an IO unit 83 of the remote IO terminal 8 through a remote IO terminal bus 81. Typically, various kinds of industrial Ethernet (registered trademark) can be used as the field network 99.

The communication coupler 82 of the remote IO terminal 8 mainly controls the action (such as IO data update timing) of the IO unit 83, and controls the data transfer to the PLC 1 connected through the field network 99. The communication coupler 82 of the remote IO terminal 8 is connected to the CPU unit 10 of the PLC 1 through the field network 99.

The IO unit 83 of the remote IO terminal 8 covers signal inputs from an external switch or sensor and signal output to an external relay or motor 89. The IO unit 83 of the remote IO terminal 8 has a general input and output processing function in addition to a function of transmitting the data to the communication coupler 82 of the remote IO terminal 8 through the remote IO terminal bus 81. Typically, the IO unit 83 of the remote IO terminal 8 inputs and outputs binarized data.

The remote IO terminals 8A and 8B have the configuration similar to that of the remote IO terminal 8 except for the PLC of the destination. The remote IO terminal 8C has the configuration similar to that of the remote IO terminal 8 except that the communication coupler 82 of the remote IO terminal 8C is connected to the communication coupler 82 of the remote IO terminal 8B. Accordingly, the detailed description of the remote IO terminals 8A, 8B, and 8C is not repeated.

The number of remote IO terminals connected to one CPU unit 10 is not limited to one or two.

### (g2. Temporal synchronization between PC 5 and programmable indicators 4, 4A, and 4B)

In the PLC system 1000A, the PC 5 and the programmable indicators 4, 4A, and 4B are temporally synchronized with each other. Particularly, the programmable indicators 4, 4A, and 4B are temporally synchronized with the PC 5 (particularly, a clock time of a clock included in the PC). Examples of a synchronizing way include (i) the case where the PC 5 directly notifies the programmable indicators 4, 4A, and 4B of clock time information to perform the synchronization, (ii) the case where the PC 5 transmits a command for acquiring the clock time information to the programmable indicators 4, 4A, and 4B to perform the synchronization, and (iii) the case where the programmable indicators 4, 4A, and 4B voluntarily acquires the clock time information from the PC 5 to perform the synchronization.

Each of the programmable indicators 4, 4A, and 4B includes the clock time information expressing the synchronized clock time in the log (particularly, the log associated with the programmable indicator). Each of the programmable indicators 4, 4A, and 4B writes the log including the clock time information in the log file OG (see Fig. 3). In the log file OG stored in the storage 41 (see Fig. 3), the event is correlated with the event generation clock time.

The programmable indicators 4, 4A, and 4B are temporally synchronized with the PC 5, whereby the event generation clock time stored as the log in each of the programmable indicators 4, 4A, and 4B is based on the clock time of the PC 5. That is, a difference in advance or delay of time (clock) can be eliminated among the programmable indicators 4, 4A, and 4B.

Accordingly, the user can recognize the log generation clock time associated with the programmable indicators 4, 4A, and 4B by a unified standard. For example, when it is proven that similar events are stored as the log in the plurality of programmable indicators at the same time, the user can notice that a common problem (for example, the point that switching of a certain page is slow, or the point that switching of a certain item (variable) of a certain page is slow) exists in the plurality of programmable indicators.

The above configuration can be applied to (i) the case where the PLC system 1000A is configured such that the programmable indicators 4, 4A, and 4B acquire the log (typically, action log) associated with the programmable indicators 4, 4A, and 4B using the logging function and (ii) the case where the PLC system 1000A is configured such that logging targets of the programmable indicators 4, 4A, and 4B are set to various devices (such as a motor 89) connected to the PLCs 1 to 3.

### (g3. Clock time synchronization between CPU unit 10 and communication coupler 82)

The processing applicable to the case where the PLC system 1000A is configured such that the logging targets of the programmable indicators 4, 4A, and 4B are set to various devices (such as the motor 89) connected to the PLCs 1 to 3 will be described below. Particularly, the case where the logging function of the programmable indicator 4 is set to the function of outputting the log (such as a data log and an alarm log) associated with the device to the log file will be described.

Each of the CPU units 10 of the PLCs 1 to 3 acts as the master device with respect to the communication coupler 82 connected to each CPU unit 10. The communication coupler 82 acts as the slave device. Similarly to the clock time synchronization between the PC 5 and the programmable indicators 4, 4A, and 4B, the PLC system 1000A performs the processing of the clock time synchronization between the master device and the slave device. Examples of the synchronizing way include (i) the case where the CPU unit 10 directly notifies the communication coupler 82 of the clock time information to perform the synchronization, (ii) the case where the CPU unit 10 transmits the command for acquiring the clock time information to the communication coupler 82 to perform the synchronization, and (iii) the case where the communication coupler 82 voluntarily acquires the clock time information from the CPU unit 10 to perform the synchronization.

For convenience, the description will be given while focusing on the programmable indicator 4B, the CPU unit 10 of the PLC 3, the communication coupler 82 of the remote IO terminal 8B, and the communication coupler 82 of the remote IO terminal 8C.

The programmable indicator 4B includes the clock time information expressing the clock time the CPU unit 10 is synchronized with the two communication couplers 82 of the remote IO terminals 8B and 8C in the log (particularly, the log associated with the device such as the motor 89). The programmable indicator 4B writes the log including the clock time information in the log file OG. In the log file OG stored in the storage 41, the event is correlated with the event generation clock time.

As described above, the two communication couplers 82 connected to each other through the CPU unit 10 of the PLC 3 and the field network 99 are temporally synchronized with the CPU unit 10 of the PLC 3, whereby the generation clock time of the event stored as the log in the programmable indicator 4B is based on the clock time of the CPU unit 10 of the PLC 3. That is, the difference in advance or delay of time (clock) can be eliminated among the CPU unit 10 of the PLC 3 and the two communication couplers 82 of the remote IO terminals 8B and 8C, which are connected to the programmable indicator 4B.

Accordingly, the user can recognize the generation clock time of the log-associated with the device included in the system unit (for example, the system unit including the PLC 3, the remote IO terminals 8B and 8C, the motor 89, the detection sensor 6, and the relay 7) monitored by the one programmable indicator, by a unified standard.

### (g4. Upload of log file to server device 9)

For example, based on the user operation, the PC 5 uploads the log file acquired from each of the programmable indicators 4, 4A, and 4B to the server device 9. At this point, each of the programmable indicators 4, 4A, and 4B transmits the log file to the server device 9 while correlating the identification information with the log file, the identification information being used by the server device 9 to identify the log file of the programmable indicator.

Using the PC 5 or other information processing devices, the user who has access to the server device 9 can access the log file stored in server device 9, and download the log file.

It is noted that the disclosed embodiments are not restrictive but illustrative in every way. The scope of the present invention is indicated by not the above description but the claims, and the meanings equivalent to the claims and all the changes within the claims are included in the present invention.

## Claims

1. A communication system (1000, 1000A) comprising:
a programmable logic controller (1, 2, 3) including a CPU unit (10);
an information processing device (5);
a remote IO terminal (8, 8A, 8B, 8C) including a communication coupler (82), the remote IO terminal (8, 8A, 8B, 8C) being connected to the programmable indicator (4, 4A, 4B, 4C) through a field network (99) and the CPU unit (10) of the programmable logic controller (1, 2, 3); and **characterized by**:
a programmable indicator (4, 4A, 4B) arranged separately from the information processing device (5), the programmable indicator (4, 4A, 4B) serving as a graphical user interface and comprising a logging function,
wherein the information processing device (5) comprises:
a reception unit (51) configured to receive input operations; and
a control unit (52) configured to control the programmable indicator (4, 4A, 4B),
when the reception unit (51) receives a first input operation, the control unit (52) performs processing of transmitting a first control command for performing the logging function to the programmable indicator (4, 4A, 4B), and
the programmable indicator (4, 4A, 4B) is configured to perform the logging function when receiving the first control command from the information processing device (5),
wherein the control unit (52) is configured to perform processing of transmitting a second control command for stopping the performance of the logging function to the programmable indicator (4, 4A, 4B) when the reception unit (51) receives a second input operation with the logging function being performed,
the programmable indicator (4, 4A, 4B) stops the performance of the logging function when receiving the second control command from the information processing device (5),
the programmable indicator (4, 4A, 4B) is configured to perform the logging based on a setting file previously stored in the programmable indicator (4, 4A, 4B),
the reception unit (51) is configured to further receive a third input operation to change the setting file,
the control unit (52) is configured to perform processing of transmitting a third control command for changing the setting file to a content corresponding to the third input operation to the programmable indicator (4, 4A, 4B),
the programmable indicator (4, 4A, 4B) is configured to change the setting file when receiving the third control command from the information processing device (5), and
the programmable indicator (4, 4A, 4B) is configured to include clock time information in the log, wherein a generation of clock time of an event stored as the log in the programmable indicator (4, 4A, 4B) is based on the clock time of a CPU unit (10) of a programmable logic controller (1, 2, 3) that is synchronized with the communication coupler (82) of the remote IO terminal (8, 8A, 8B, 8C), so as to eliminate a difference in advance or delay of time among the CPU unit (10) of the programmable logic controller (1, 2, 3) and the communication coupler (82) of the remote IO terminal (8, 8A, 8B, 8C).

2. The communication system (1000, 1000A) according to claim 1, wherein the logging function is a function of outputting a log associated with the programmable indicator (4, 4A, 4B) to a file.

3. The communication system (1000, 1000A) according to claim 2, wherein the programmable indicator (4, 4A, 4B) is temporally synchronized with the information processing device (5).

4. The communication system (1000, 1000A) according to claim 3, wherein the communication system (1000, 1000A) further comprises a server device (9) communicably connected to the information processing device (5), and
the information processing device (5) transmits the log associated with the programmable indicator (4, 4A, 4B) to the server device (9).

5. The communication system (1000, 1000A) according to claim 1, wherein the programmable indicator (4, 4A, 4B) is communicably connected to a control device of a device, and
the logging function is a function of outputting a log associated with the device to a file.

6. The communication system (1000, 1000A) according to claim 5, wherein the device is temporally synchronized with the control device, and
the log associated with the device comprises clock time information.

7. The communication system (1000, 1000A) according to claim 6, wherein the communication system (1000, 1000A) further comprises a server device (9) communicably connected to the information processing device (5), and
the information processing device (5) transmits the log associated with the device to the server device (9).

8. The communication system (1000, 1000A) according to any of claims 1 to 7, wherein the programmable indicator (4, 4A, 4B) generates a log file in which a log is recorded by the logging function,
the control unit (52) performs processing of transmitting a fourth control command for deleting the log file to the programmable indicator (4, 4A, 4B) when the reception unit (51) receives fourth input operation to delete the log file, and
the programmable indicator (4, 4A, 4B) deletes the log file when receiving the fourth control command from the information processing device (5).

9. The communication system (1000, 1000A) according to claim 8, wherein the information processing device (5) comprises a web browser (522), and
the programmable indicator (4, 4A, 4B) performs processing of causing the information processing device (5) to display a content of the log file based on a command from the web browser (522).

10. A method for operating a communication system (1000, 1000A) comprising a programmable logic controller (1, 2, 3) including a CPU unit (10); an information processing device (5); a remote IO terminal (8, 8A, 8B, 8C) including a communication coupler (82), the remote IO terminal (8, 8A, 8B, 8C) being connected to the programmable indicator (4, 4A, 4B, 4C) through a field network (99) and the CPU unit (10) of the programmable logic controller (1, 2, 3); and, **characterized by**: a programmable indicator (4,
4A, 4B) arranged separately from the information processing device (5), the programmable indicator (4, 4A, 4B) serving as a graphical user interface and having a logging function, the information processing device (5) comprising a reception unit (51) configured to receive input operations and a control unit (52) configured to control the programmable indicator (4, 4A, 4B), the method comprising:
a step in which, when the reception unit (51) receives a first input operation, the control unit (52) transmits a first control command for performing the logging function to the programmable indicator (4, 4A, 4B),
a step in which, upon receiving the first control command from the information processing device (5), the programmable indicator (4, 4A, 4B) performs the logging function, based on a setting file previously stored in the programmable indicator (4, 4A, 4B),
a step in which, when the reception unit (51) receives a second input operation with the logging function being performed, the control unit (52) performs processing of transmitting a second control command for stopping the performance of the logging function to the programmable indicator (4, 4A, 4B),
a step in which, when receiving the second control command from the information processing device (5), the programmable indicator (4, 4A, 4B) stops the performance of the logging function,
a step in which the reception unit (51) further receives a third input operation to change the setting file,
a step in which the control unit (52) transmits a third control command for changing the setting file to a content corresponding to the third input operation to the programmable indicator (4, 4A, 4B),
a step in which the programmable indicator (4, 4A, 4B) changes the description of the setting file upon receiving the third control command from the information processing device (5), and
a step in which the programmable indicator (4, 4A, 4B) includes clock time information in the log, wherein a generation of clock time of an event stored as the log in the programmable indicator (4, 4A, 4B) is based on the clock time of a CPU unit (10) of a programmable logic controller (1, 2, 3) that is synchronized with the communication coupler (82) of the remote IO terminal (8, 8A, 8B, 8C), so as to eliminate a difference in advance or delay of time among the CPU unit (10) of the programmable logic controller (1, 2, 3) and communication coupler (82) of the remote IO terminal (8, 8A, 8B, 8C).

## Patentansprüche

1. Kommunikationssystem (1000, 1000A), umfassend:
eine speicherprogrammierbare Steuerung (1, 2, 3) mit einer CPU-Einheit (10);
eine Informationsverarbeitungseinrichtung (5);
ein entferntes E/A-Endgerät (8, 8A, 8B, 8C) mit einem Kommunikationskoppler (82), wobei das entfernte E/A-Endgerät (8, 8A, 8B, 8C) über ein Feldnetzwerk (99) mit dem programmierbaren Indikator (4, 4A, 4B, 4C) und der CPU-Einheit (10) der speicherprogrammierbaren Steuerung (1, 2, 3) verbunden ist; und
**gekennzeichnet durch**
einen programmierbaren Indikator (4, 4A, 4B), der separat von der Informationsverarbeitungseinrichtung (5) angeordnet ist, wobei der programmierbare Indikator (4, 4A, 4B) als grafische Benutzerschnittstelle dient und eine Protokollierungsfunktion aufweist,
wobei die Informationsverarbeitungseinrichtung (5) umfasst:
eine Empfangseinheit (51), die dazu eingerichtet ist, Eingabeoperationen zu empfangen; und
eine Steuereinheit (52), die dazu eingerichtet ist, den programmierbaren Indikator (4, 4A, 4B) zu steuern,
wenn die Empfangseinheit (51) eine erste Eingabeoperation empfängt, die Steuereinheit (52) eine Verarbeitung zum Übertragen eines ersten Steuerbefehls zum Ausführen der Protokollierungsfunktion an den programmierbaren Indikator (4, 4A, 4B) durchführt, und
der programmierbare Indikator (4, 4A, 4B) dazu eingerichtet ist, die Protokollierungsfunktion auszuführen, wenn er den ersten Steuerbefehl von der Informationsverarbeitungseinrichtung (5) empfängt,
wobei die Steuereinheit (52) dazu eingerichtet ist, eine Verarbeitung zum Übertragen eines zweiten Steuerbefehls zum Stoppen des Ausführens der Protokollierungsfunktion an den programmierbaren Indikator (4, 4A, 4B) durchzuführen, wenn die Empfangseinheit (51) eine zweite Eingabeoperation empfängt, während die Protokollierungsfunktion ausgeführt wird,
wobei der programmierbare Indikator (4, 4A, 4B) das Ausführen der Protokollierungsfunktion stoppt, wenn er den zweiten Steuerbefehl von der Informationsverarbeitungseinrichtung (5) empfängt,
der programmierbare Indikator (4, 4A, 4B) dazu eingerichtet ist, das Protokollieren basierend auf einer Einstellungsdatei auszuführen, die vorab in dem programmierbaren Indikator (4, 4A, 4B) gespeichert ist,
die Empfangseinheit (51) dazu eingerichtet ist, ferner eine dritte Eingabeoperation zum Ändern der Einstellungsdatei zu empfangen,
die Steuereinheit (52) dazu eingerichtet ist, eine Verarbeitung zum Übertragen eines dritten Steuerbefehls zum Ändern der Einstellungsdatei in einen der dritten Eingabeoperation entsprechenden Inhalt an den programmierbaren Indikator (4, 4A, 4B) durchzuführen,
der programmierbare Indikator (4, 4A, 4B) dazu eingerichtet ist, die Einstellungsdatei zu ändern, wenn er den dritten Steuerbefehl von der Informationsverarbeitungseinrichtung (5) empfängt, und
der programmierbare Indikator (4, 4A, 4B) dazu eingerichtet ist, Taktzeitinformationen in das Protokoll aufzunehmen, wobei eine Erzeugung einer Taktzeit eines als das Protokoll in dem programmierbaren Indikator (4, 4A, 4B) gespeicherten Ereignisses auf der Taktzeit einer CPU-Einheit (10) einer speicherprogrammierbaren Steuerung (1, 2, 3) beruht, die mit dem Kommunikationskoppler (82) des entfernten E/A-Endgeräts (8, 8A, 8B, 8C) synchronisiert ist, um eine Differenz eines Vorauseilens oder Nachlaufens einer Zeit zwischen der CPU-Einheit (10) der speicherprogrammierbaren Steuerung (1, 2, 3) und dem Kommunikationskoppler (82) des entfernten E/A-Endgeräts (8, 8A, 8B, 8C) zu eliminieren.

2. Kommunikationssystem (1000, 1000A) nach Anspruch 1, wobei die Protokollierungsfunktion eine Funktion zum Ausgeben eines mit dem programmierbaren Indikator (4, 4A, 4B) verknüpften Protokolls in eine Datei ist.

3. Kommunikationssystem (1000, 1000A) nach Anspruch 2, wobei der programmierbare Indikator (4, 4A, 4B) zeitlich mit der Informationsverarbeitungseinrichtung (5) synchronisiert ist.

4. Kommunikationssystem (1000, 1000A) nach Anspruch 3, wobei das Kommunikationssystem (1000, 1000A) ferner eine Servereinrichtung (9) umfasst, die kommunikativ mit der Informationsverarbeitungseinrichtung (5) verbunden ist, und
die Informationsverarbeitungseinrichtung (5) das Protokoll, das mit dem programmierbaren Indikator (4, 4A, 4B) verknüpft ist, an die Servereinrichtung (9) überträgt.

5. Kommunikationssystem (1000, 1000A) nach Anspruch 1, wobei der programmierbare Indikator (4, 4A, 4B) kommunikativ mit einer Steuereinrichtung eines Geräts verbunden ist, und
die Protokollierungsfunktion eine Funktion zum Ausgeben eines mit dem Gerät verknüpften Protokolls in eine Datei ist.

6. Kommunikationssystem (1000, 1000A) nach Anspruch 5, wobei das Gerät zeitlich mit der Steuereinrichtung synchronisiert ist, und
das mit dem Gerät verknüpfte Protokoll Taktzeitinformationen umfasst.

7. Kommunikationssystem (1000, 1000A) nach Anspruch 6, wobei das Kommunikationssystem (1000, 1000A) ferner eine Servereinrichtung (9) umfasst, die kommunikativ mit der Informationsverarbeitungseinrichtung (5) verbunden ist, und
die Informationsverarbeitungseinrichtung (5) das mit dem Gerät verknüpfte Protokoll an die Servereinrichtung (9) überträgt.

8. Kommunikationssystem (1000, 1000A) nach einem der Ansprüche 1 bis 7, wobei der programmierbare Indikator (4, 4A, 4B) eine Protokolldatei generiert, in welcher von der Protokollierungsfunktion ein Protokoll aufgezeichnet wird,
die Steuerreinheit (52) eine Verarbeitung zum Übertragen eines vierten Steuerbefehls zum Löschen der Protokolldatei an den programmierbaren Indikator (4, 4A, 4B) überträgt, wenn die Empfangseinheit (51) eine vierte Eingabeoperation zum Löschen der Protokolldatei empfängt, und
der programmierbare Indikator (4, 4A, 4B) die Protokolldatei löscht, wenn er den vierten Steuerbefehl von der Informationsverarbeitungseinrichtung (5) empfängt.

9. Kommunikationssystem (1000, 1000A) nach Anspruch 8, wobei die Informationsverarbeitungseinrichtung (5) einen Webbrowser (522) umfasst, und
der programmierbare Indikator (4, 4A, 4B) eine Verarbeitung zum Veranlassen, dass die Informationsverarbeitungseinrichtung (5) einen Inhalt der Protokolldatei anzeigt, basierend auf einem Befehl von dem Webbrowser (522) durchführt.

10. Verfahren zum Betreiben eines Kommunikationssystems (1000, 1000A), das aufweist: eine speicherprogrammierbare Steuerung (1, 2, 3) mit einer CPU-Einheit (10); eine Informationsverarbeitungseinrichtung (5); ein entferntes E/A-Endgerät (8, 8A, 8B, 8C) mit einem Kommunikationskoppler (82), wobei das entfernte E/A-Endgerät (8, 8A, 8B, 8C) über ein Feldnetzwerk (99) mit dem programmierbaren Indikator (4, 4A, 4B, 4C) und der CPU-Einheit (10) der speicherprogrammierbaren Steuerung (1, 2, 3) verbunden ist; und **gekennzeichnet ist durch** einen programmierbaren Indikator (4, 4A, 4B), der separat von der Informationsverarbeitungseinrichtung (5) angeordnet ist, wobei der programmierbare Indikator (4, 4A, 4B) als grafische Benutzerschnittstelle dient und eine Protokollierungsfunktion aufweist, wobei die Informationsverarbeitungseinrichtung (5) eine Empfangseinheit (51), die dazu eingerichtet ist, Eingabeoperationen zu empfangen; und eine Steuereinheit (52) umfasst, die dazu eingerichtet ist, den programmierbaren Indikator (4, 4A, 4B) zu steuern, wobei das Verfahren umfasst:
einen Schritt, bei dem, wenn die Empfangseinheit (51) eine erste Eingabeoperation empfängt, die Steuereinheit (52) einen ersten Steuerbefehl zum Ausführen der Protokollierungsfunktion an den programmierbaren Indikator (4, 4A, 4B) überträgt,
einen Schritt, bei dem der programmierbare Indikator (4, 4A, 4B), wenn er den ersten Steuerbefehl von der Informationsverarbeitungseinrichtung (5) empfängt, die Protokollierungsfunktion basierend auf einer Einstellungsdatei ausführt, die vorab in dem programmierbaren Indikator (4, 4A, 4B) gespeichert ist,
einen Schritt, bei dem, wenn die Empfangseinheit (51) eine zweite Eingabeoperation empfängt, während die Protokollierungsfunktion ausgeführt wird, die Steuereinheit (52) eine Verarbeitung zum Übertragen eines zweiten Steuerbefehls zum Stoppen des Ausführens der Protokollierungsfunktion an den programmierbaren Indikator (4, 4A, 4B) durchführt,
einen Schritt, bei dem der programmierbare Indikator (4, 4A, 4B), wenn er den zweiten Steuerbefehl von der Informationsverarbeitungseinrichtung (5) empfängt, das Ausführen der Protokollierungsfunktion stoppt,
einen Schritt, bei dem die Empfangseinheit (51) ferner eine dritte Eingabeoperation zum Ändern der Einstellungsdatei empfängt,
einen Schritt, bei dem die Steuereinheit (52) einen dritten Steuerbefehl zum Ändern der Einstellungsdatei in einen der dritten Eingabeoperation entsprechenden Inhalt an den programmierbaren Indikator (4, 4A, 4B) überträgt,
einen Schritt, bei dem der programmierbare Indikator (4, 4A, 4B) die Beschreibung der Einstellungsdatei ändert, wenn er den dritten Steuerbefehl von der Informationsverarbeitungseinrichtung (5) empfängt, und
einen Schritt, bei dem der programmierbare Indikator (4, 4A, 4B) Taktzeitinformationen in das Protokoll aufnimmt, wobei eine Erzeugung einer Taktzeit eines als das Protokoll in dem programmierbaren Indikator (4, 4A, 4B) gespeicherten Ereignisses auf der Taktzeit einer CPU-Einheit (10) einer speicherprogrammierbaren Steuerung (1, 2, 3) beruht, die mit dem Kommunikationskoppler (82) des entfernten E/A-Endgeräts (8, 8A, 8B, 8C) synchronisiert ist, um eine Differenz eines Vorauseilens oder Nachlaufens einer Zeit zwischen der CPU-Einheit (10) der speicherprogrammierbaren Steuerung (1, 2, 3) und dem Kommunikationskoppler (82) des entfernten E/A-Endgeräts (8, 8A, 8B, 8C) zu eliminieren.

## Revendications

1. Système de communication (1000, 1000A) comprenant :
un automate programmable (1, 2, 3) comprenant une unité d'UC (10) ;
un dispositif de traitement d'informations (5) ;
un terminal E/S distant (8, 8A, 8B, 8C) comprenant un coupleur de communication (82), le terminal E/S distant (8, 8A, 8B, 8C) étant connecté à un indicateur programmable (4, 4A, 4B, 4C) par l'intermédiaire d'un réseau de terrain (99) et de l'unité d'UC (10) de l'automate programmable (1, 2, 3) ; et
**caractérisé par** :
un indicateur programmable (4, 4A, 4B) agencé séparément du dispositif de traitement d'informations (5), l'indicateur programmable (4, 4A, 4B) servant d'interface utilisateur graphique et comprenant une fonction de journalisation,
dans lequel le dispositif de traitement d'informations (5) comprend :
une unité de réception (51) configurée pour recevoir des opérations d'entrée ; et
une unité de commande (52) configurée pour commander l'indicateur programmable (4, 4A, 4B), lorsque l'unité de réception (51) reçoit une première opération d'entrée, l'unité de commande (52) effectue un traitement de transmission d'une première commande de contrôle pour effectuer la fonction de journalisation à l'indicateur programmable (4, 4A, 4B), et
l'indicateur programmable (4, 4A, 4B) est configuré pour effectuer la fonction de journalisation lors de la réception de la première commande de contrôle à partir du dispositif de traitement d'informations (5),
dans lequel l'unité de commande (52) est configurée pour effectuer un traitement de transmission d'une seconde commande de contrôle pour arrêter l'exécution de la fonction de journalisation à l'indicateur programmable (4, 4A, 4B) lorsque l'unité de réception (51) reçoit une seconde opération d'entrée avec la fonction de journalisation effectuée,
l'indicateur programmable (4, 4A, 4B) arrête l'exécution de la fonction de journalisation lors de la réception de la seconde commande de contrôle à partir du dispositif de traitement d'informations (5),
l'indicateur programmable (4, 4A, 4B) est configuré pour effectuer la journalisation sur la base d'un fichier de configuration préalablement stocké dans l'indicateur programmable (4, 4A, 4B),
l'unité de réception (51) est configurée pour recevoir en outre une troisième opération d'entrée pour modifier le fichier de configuration,
l'unité de commande (52) est configurée pour effectuer un traitement de transmission d'une troisième commande de contrôle pour modifier le fichier de configuration en un contenu correspondant à la troisième opération d'entrée à l'indicateur programmable (4, 4A, 4B),
l'indicateur programmable (4, 4A, 4B) est configuré pour modifier le fichier de configuration lors de la réception de la troisième commande de contrôle à partir du dispositif de traitement d'informations (5), et
l'indicateur programmable (4, 4A, 4B) est configuré pour inclure des informations de temps d'horloge dans le journal, dans lequel une génération de temps d'horloge d'un événement stocké en tant que journal dans l'indicateur programmable (4, 4A, 4B) est basée sur le temps d'horloge d'une unité UC (10) d'un automate programmable (1, 2, 3) qui est synchronisée avec le coupleur de communication (82) du terminal E/S distant (8, 8A, 8B, 8C), de manière à éliminer une différence d'avance ou de retard de temps entre l'unité UC (10) de l'automate programmable (1, 2, 3) et le coupleur de communication (82) du terminal E/S distant (8, 8A, 8B, 8C).

2. Système de communication (1000, 1000A) selon la revendication 1, dans lequel la fonction de journalisation est une fonction de fourniture d'un journal associé à l'indicateur programmable (4, 4A, 4B) dans un fichier.

3. Système de communication (1000, 1000A) selon la revendication 2, dans lequel l'indicateur programmable (4, 4A, 4B) est synchronisé temporellement avec le dispositif de traitement d'informations (5).

4. Système de communication (1000, 1000A) selon la revendication 3, dans lequel le système de communication (1000, 1000A) comprend en outre un dispositif serveur (9) connecté en communication au dispositif de traitement d'informations (5), et
le dispositif de traitement d'informations (5) transmet le journal associé à l'indicateur programmable (4, 4A, 4B) au dispositif serveur (9).

5. Système de communication (1000, 1000A) selon la revendication 1, dans lequel l'indicateur programmable (4, 4A, 4B) est connecté en communication à un dispositif de commande d'un dispositif, et
la fonction de journalisation est une fonction de fourniture d'un journal associé au dispositif à un fichier.

6. Système de communication (1000, 1000A) selon la revendication 5, dans lequel le dispositif est synchronisé temporellement avec le dispositif de commande, et
le journal associé au dispositif comprend des informations de temps d'horloge.

7. Système de communication (1000, 1000A) selon la revendication 6, dans lequel le système de communication (1000, 1000A) comprend en outre un dispositif serveur (9) connecté en communication au dispositif de traitement d'informations (5), et
le dispositif de traitement d'informations (5) transmet le journal associé au dispositif au dispositif serveur (9).

8. Système de communication (1000, 1000A) selon l'une quelconque des revendications 1 à 7, dans lequel l'indicateur programmable (4, 4A, 4B) génère un fichier journal dans lequel un journal est enregistré par la fonction de journalisation,
l'unité de commande (52) effectue un traitement de transmission d'une quatrième commande de contrôle pour supprimer le fichier journal à l'indicateur programmable (4, 4A, 4B) lorsque l'unité de réception (51) reçoit une quatrième opération d'entrée pour supprimer le fichier journal,
l'indicateur programmable (4, 4A, 4B) supprime le fichier journal lors de la réception de la quatrième commande de contrôle à partir du dispositif de traitement d'informations (5).

9. Système de communication (1000, 1000A) selon la revendication 8, dans lequel le dispositif de traitement d'informations (5) comprend un navigateur Web (522), et
l'indicateur programmable (4, 4A, 4B) effectue un traitement consistant à amener le dispositif de traitement d'informations (5) à afficher un contenu du fichier journal sur la base d'une commande provenant du navigateur Web (522).

10. Procédé pour faire fonctionner un système de communication (1000, 1000A) comprenant un automate programmable (1, 2, 3) comportant une unité d'UC (10) ; un dispositif de traitement d'informations (5) ;
un terminal E/S distant (8, 8A, 8B, 8C) comprenant un coupleur de communication (82), le terminal E/S distant (8, 8A, 8B, 8C) étant connecté à l'indicateur programmable (4, 4A, 4B, 4C) par l'intermédiaire d'un réseau de terrain (99) et de l'unité d'UC (10) de l'automate programmable (1, 2, 3) ; et **caractérisé par** :
un indicateur programmable (4, 4A, 4B) agencé séparément du dispositif de traitement d'informations (5), l'indicateur programmable (4, 4A, 4B) servant d'interface utilisateur graphique et ayant une fonction de journalisation, le dispositif de traitement d'informations (5) comprenant une unité de réception (51) configurée pour recevoir des opérations d'entrée et une unité de commande (52) configurée pour commander l'indicateur programmable (4, 4A, 4B), le procédé comprenant :
une étape dans laquelle, lorsque l'unité de réception (51) reçoit une première opération d'entrée, l'unité de commande (52) transmet une première commande de contrôle pour effectuer la fonction de journalisation à l'indicateur programmable (4, 4A, 4B),
une étape dans laquelle, à la réception de la première commande de contrôle à partir du dispositif de traitement d'informations (5), l'indicateur programmable (4, 4A, 4B) effectue la fonction de journalisation, sur la base d'un fichier de configuration préalablement stocké dans l'indicateur programmable (4, 4A, 4B),
une étape dans laquelle, lorsque l'unité de réception (51) reçoit une seconde opération d'entrée avec la fonction de journalisation effectuée, l'unité de commande (52) effectue un traitement de transmission d'une seconde commande de contrôle pour arrêter l'exécution de la fonction de journalisation à l'indicateur programmable (4, 4A, 4B),
une étape dans laquelle, lorsqu'il reçoit la seconde commande de contrôle à partir du dispositif de traitement d'informations (5), l'indicateur programmable (4, 4A, 4B) arrête l'exécution de la fonction de journalisation,
une étape dans laquelle l'unité de réception (51) reçoit en outre une troisième opération d'entrée pour modifier le fichier de configuration,
une étape dans laquelle l'unité de commande (52) transmet une troisième commande de contrôle pour modifier le fichier de configuration en un contenu correspondant à la troisième opération d'entrée à l'indicateur programmable (4, 4A, 4B),
une étape dans laquelle l'indicateur programmable (4, 4A, 4B) modifie la description du fichier de configuration lors de la réception de la troisième commande de contrôle à partir du dispositif de traitement d'informations (5), et
une étape dans laquelle l'indicateur programmable (4, 4A, 4B) comprend des informations de temps d'horloge dans le journal, dans lequel une génération de temps d'horloge d'un événement stocké en tant que journal dans l'indicateur programmable (4, 4A, 4B) est basée sur le temps d'horloge d'une unité d'UC (10) d'un automate programmable (1, 2, 3) qui est synchronisée avec le coupleur de communication (82) du terminal E/S distant (8, 8A, 8B, 8C), de manière à éliminer une différence d'avance ou de retard entre l'unité UC (10) de l'automate programmable (1, 2, 3) et le coupleur de communication (82) du terminal E/S distant (8, 8A, 8B, 8C).
